# EUROPÄISCHE PATENTANMELDUNG

(11) **EP 0 623 410 A1**
(43) Veröffentlichungstag der Anmeldung: **09.11.1994**
(21) Anmeldenummer: 94106609.4
(22) Anmeldetag: 27.04.1994
(51) Int. Cl.: B23B 5/36

(54) **Verfahren und Vorrichtung zur Herstellung einer torusförmigen Fläche an einem Drehteil**

(30) Priorität: 04.05.1993 DE 4314723
(71) Anmelder: LUDWIG BOSCHERT MASCHINEN- UND APPARATEBAU GMBH & CO. KG, D-79541 Lörrach (DE)
(72) Erfinder: Fazis, Harald, D-7858 Weil (DE)
(74) Vertreter: Gauger, Hans-Peter, Dipl.-Ing.

(57) **Zusammenfassung**

Für die Herstellung einer im wesentlichen torusförmigen Fläche (7) an einem Drehteil (1) durch eine spanabhebende Bearbeitung ist eine Drehung des Drehteils um eine erste Drehachse (3) und gleichzeitig eine Drehung des für diese Bearbeitung verwendeten Drehstahls (8) um eine zweite Drehachse (10) vorgesehen, die durch die vorbestimmte Mitte (4) der Kreisfläche des Torus hindurchgeht, der während der Drehung des Drehteils (1) um die erste Drehachse (3) die zu bearbeitende Fläche (7) des Drehteils (1) ergibt.

## Beschreibung

Die Erfindung bezieht sich auf ein Verfahren und eine Vorrichtung zur Herstellung einer im wesentlichen torusförmigen Fläche an einem Drehteil durch eine spanabhebende Bearbeitung. Eine solche im wesentlichen torusförmige Fläche ist bspw. an dem Umfang eines Handrades vorgesehen, das bei den Klapplagern verwendet wird, mittels welcher die Wickelstäbe von Wickelmaschinen gelagert werden, die bspw. in der Papier- oder Textilindustrie die dabei verwendeten Materialbahnen auf- oder abwickeln.

Bei den vorerwähnten Handrädern für solche Klapplager handelt es sich im allgemeinen um kreisscheibenförmige Gußkörper, die in der Scheibenmitte eine gegenüber dem Scheibenumfang verringerte Materialdicke aufweisen. Der Scheibenumfang ist daher wulstförmig verdickt und ergibt eine im wesentlichen torusförmige Umfangsfläche, die zwischen den beiden stirnseitigen Scheibenflächen über einen Umfangswinkel von etwa 270° in Bezug auf die Mitte der Kreisfläche verläuft, welche den radialen Querschnitt dieses wulstförmigen Scheibenumfanges ausbildet. Die Größe dieses Umfangswinkels von mehr als 180° ist dabei durch die verringerte Materialdicke der Scheibenmitte vorgegeben. In Abhängigkeit von der abweichenden Größe der Materialdicke der Scheibenmitte kann dabei also der Umfangswinkel auch größer oder kleiner als 270° ausfallen, womit auch die torusförmige Umfangsfläche des Handrades für die Bearbeitung entsprechend größer oder kleiner ausfällt.

Eine spanabhebende Bearbeitung der torusförmigen Umfangsfläche solcher Handräder wird bis jetzt auf einer Drehmaschine vorgenommen, bei welcher der mit der Bearbeitungsfläche des durch die Arbeitsspindel der Drehmaschine gedrehten Gußkörpers in Berührung gehaltene Drehstahl an dem Maschinenschlitten der Drehmaschine eingespannt ist. Mit dieser Anordnung des Drehstahls ist es jedoch nicht möglich, die torusförmige Fläche in einem Durchgang über den gesamten Umfangswinkel zu bearbeiten, vielmehr muß dabei der Gußkörper nach einer ersten Teilbearbeitung nur eines Teils der torusförmigen Umfangsfläche um 180° gewendet und neu an der Arbeitsspindel der Drehmaschine festgelegt werden, sodaß dann von der entgegengesetzten Stirnfläche des Gußkörpers her der restliche Teil der torusförmigen Umfangsfläche bearbeitet werden kann. Diese Bearbeitung ist nicht nur entsprechend zeit- und kostenaufwendig, vielmehr läßt sich damit auch keine größere Oberflächengüte erreichen, sodaß in aller Regel an die Bearbeitung mit dem Drehstahl noch eine Nachbearbeitung für die gewünschte Bereitstellung einer polierten Fläche angeschlossen werden muß.

Die durch die Patentansprüche gekennzeichnete Erfindung löst die **Aufgabe,** ein Verfahren und eine Vorrichtung zur Herstellung einer im wesentlichen torusförmigen Fläche an einem Drehteil durch eine spanabhebende Bearbeitung derart auszubilden, daß die torusförmige Fläche ohne eine Unterbrechung der Bearbeitung ab dem Zeitpunkt der erstmaligen Berührungsstellung des Drehstahls fertig bearbeitet werden kann und damit gleichzeitig eine höhere Oberflächengüte der bearbeiteten Fläche des Drehteils erzielbar ist.

Durch die bei dem erfindungsgemäßen Verfahren vorgesehene Drehung des Drehstahls um eine zweite Drehachse, die dabei rechtwinklig zu der für eine Drehung des Drehteils vorgegebenen ersten Drehachse verläuft und durch die vorbestimmte Mitte der Kreisfläche des Torus hindurchgeht, der während der Drehung des Drehteils um die erste Drehachse die zu bearbeitende Fläche des Drehteils ergibt, ist die maßgebliche Voraussetzung dafür geschaffen, daß jetzt der Drehstahl bspw. für die torusförmige Umfangsfläche eines Handrades für ein Klapplager über deren vollen Umfangswinkel von bspw. etwa 270° zwischen einer Ausgangs- und einer Endstellung ohne jede Unterbrechung der Berührungsstellung bewegt werden kann. Durch diese ununterbrochene Drehbewegung des Drehstahls relativ zu dem Drehteil wird nicht nur die früher für das Wenden des Drehteils notwendige Umrüstzeit eingespart, es wird vielmehr damit auch gleichzeitig eine Verbesserung der Oberflächengüte erhalten, weil hierbei jede bisher wegen des Wendens meistens unvermeidbar gewesene Ausbildung eines Schneidgrates an der Übergangsstelle der aufeinanderfolgend bearbeiteten Teilflächen vermieden wird. Die Bearbeitung kann dabei selbst so fein abgestellt werden, daß eine nahezu polierte Oberfläche erhalten wird, die eine weitere Nacharbeitung des Handrades erübrigt. Die zur Ausübung des Verfahrens vorgesehene Vorrichtung kann außerdem als eine preiswerte Zusatzeinrichtung für eine vorhandene Drehmaschine bereitgestellt werden, mit der es auch möglich ist, eine Bearbeitung von unterschiedlich großen Handrädern ohne eine zeitaufwendige Umrüstung durchzuführen.

Ein Ausführungsbeispiel einer erfindungsgemäßen Vorrichtung ist in der Zeichnung schematisch dargestellt und wird nachfolgend näher erläuert. Es zeigt
- Fig. 1: eine Schemadarstellung zur näheren Erläuterung des Grundprinzips des erfindungsgemäßen Verfahrens bei der Bearbeitung eines mit einer Stirnansicht gezeigten Handrades für ein Klapplager,
- Fig. 2: die Schemadarstellung der Fig. 1 in einer Schnittansicht,
- Fig. 3: eine Schnittansicht der zur Bearbeitung eines Handrades für ein Klapplager entsprechend dieser Schemadarstellung ausgebildeten Vorrichtung und
- Fig. 4: einen Querschnitt der Vorrichtung in Draufsicht.

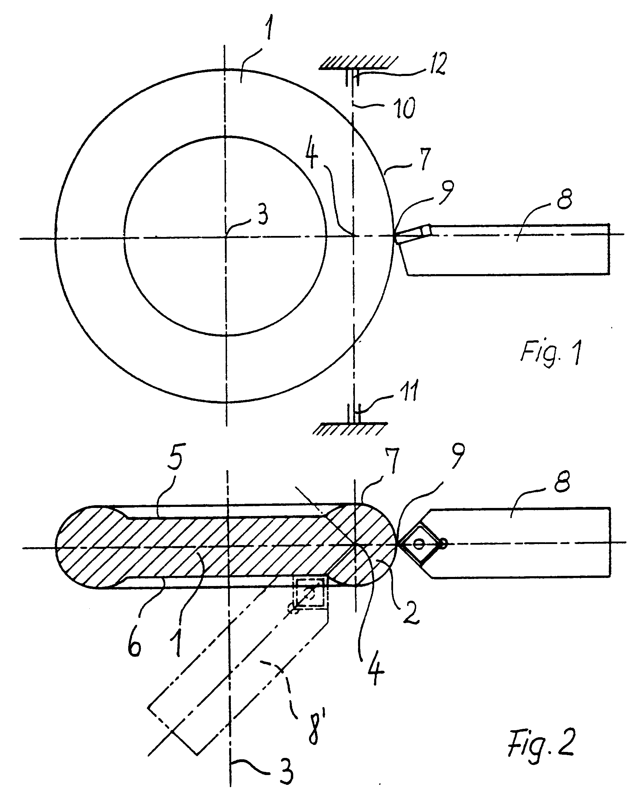

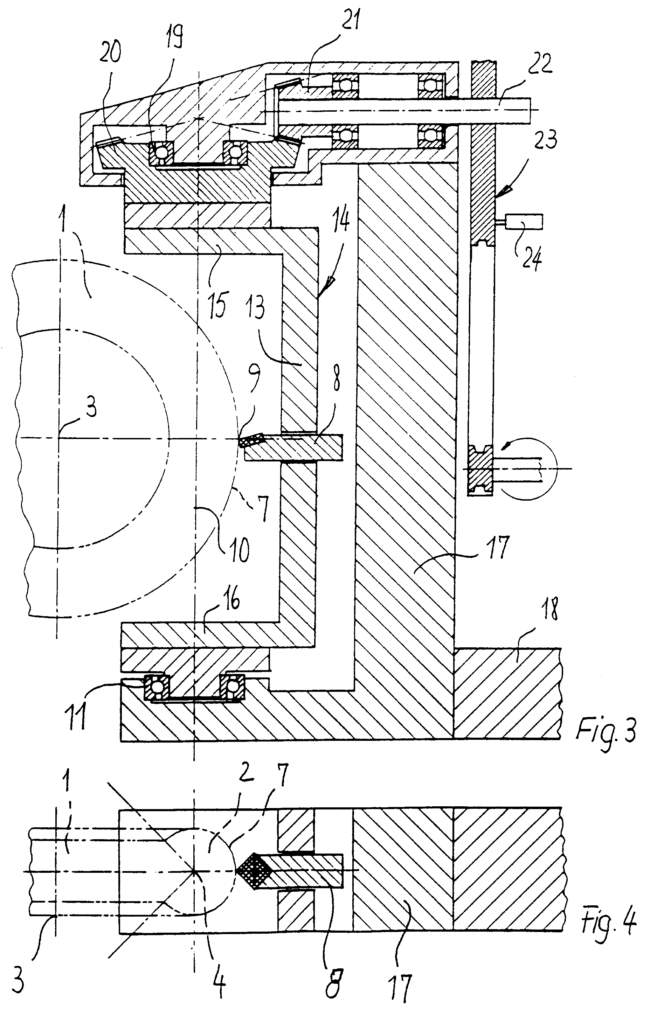

In der Schemadarstellung der Figuren 1 und 2 ist ein zur Verwendung bei einem Klapplager vorgesehenes Handrad als ein kreisscheibenförmiges Drehteil 1 gezeigt, bei welchem die Materialdicke der Scheibenmitte im Vergleich zu dem Scheibenumfang verringert ist. Der somit wulstförmig verdickte Scheibenumfang stellt sich als ein Torus dar, der durch die Drehung einer Kreisfläche 2 um eine Drehachse 3 erhalten ist. Die Kreisfläche 2 reicht dabei aber nur über einen Umfangswinkel von etwa 270° in Bezug auf die Kreismitte 4 und endet in den beiden Stirnflächen 5 und 6 der Scheibenmitte, zu denen die Drehachse 3 senkrecht ausgerichtet ist.

Für eine spanabhebende Bearbeitung der somit im wesentlichen torusförmigen Umfangsfläche 7 des Drehteils 1, die über den vorerwähnten Umfangswinkel von etwa 270° der Kreisfläche 2 in Bezug auf die Kreismitte 4 verläuft, ist ein Drehstahl 8 vorgesehen, dessen Schneidspitze 9 auf eine Radialebene des Drehteils 1 ausgerichtet ist. Die Schneidspitze 9 ist mit der torusförmigen Umfangsfläche 7 des Drehteils 1 in Berührung gehalten. Für die Bearbeitung dieser Fläche wird nun mit der Drehachse 3 des Drehteils 1 eine erste Drehachse bereitgestellt, um welche das Drehteil während der Bearbeitung bspw. durch die Arbeitsspindel einer Drehmaschine gedreht wird. Neben dieser ersten Drehachse 3 ist weiterhin eine zweite Drehachse 10 vorgesehen, die rechtwinklig zu der ersten Drehachse 3 verläuft und durch die Mitte 4 der Kreisfläche 2 und somit des Torus hindurchgeht, der während der Drehung des Drehteils 1 um die erste Drehachse 3 die zu bearbeitende Fläche 7 des Drehteils ergibt. Diese zweite Drehachse 10 ist daher für eine Drehung des Drehstahls 8 relativ zu dem Drehteil 1 bspw. zwischen der in Fig. 2 strichpunktiert gezeigten Ausgangsstellung 8' und einer Endstellung vorgesehen, in welche die Schneidspitze 9 des Drehstahls 8 während einer Bearbeitung der Fläche 7 über den vorerwähnten Umfangswinkel von etwa 270° bewegt wird. Für die Drehachse 10 sind in Fig. 1 im übrigen noch zwei Drehlager 11 und 12 angedeutet, die eine vertikale Ausrichtung dieser Drehachse bei einer horizontalen Ausrichtung der ersten Drehachse 3 sichern, wobei diese vertikale Ausrichtung wie vorerwähnt durch die Mitte 4 der Kreisfläche 2 hindurchgeht.

Für eine praktische Ausführungsform der Vorrichtung ist eine Befestigung des Drehstahls 8 an dem Steg 13 eines im wesentlichen U-förmig ausgebildeten Werkzeughalters 14 vorgesehen, über dessen beide Schenkel 15 und 16 die zweite Drehachse 10 bspw. an einer Konsole 17 drehbar abgestützt ist. Die Konsole 17 kann an dem Maschinenschlitten der Drehmaschine befestigt sein, was mit dem Befestigungsteil 18 schematisch angedeutet ist. In Fig. 3 ist im übrigen nur das untere Stützlager 11 der zweiten Drehachse 10 gezeigt. Das obere Stützlager ist als ein Drehlager 19 für ein Schneckenrad 20 dargestellt, das ein Bauteil einer für einen motorischen Antrieb des Werkzeughalters 14 zwischengeschalteten Getriebeübersetzung ist und mit einer Antriebsschnecke 21 im Zahneingriff steht, deren Antriebswelle 22 über einen Riemenantrieb 23 durch einen Servomotor (nicht dargestellt) angetrieben werden kann. Durch die mit den Schneckenrädern 20, 21 ausgebildete Getriebeübersetzung sowie durch den Riementrieb 23 wird der Vorschub beeinflußt, mit welchem bei eingeschaltetem Servomotor der Drehstahl 8 über die zu bearbeitende Fläche 7 des Drehteils 1 bewegt wird. Diese Bearbeitung kann in Abhängigkeit von einer anfänglich vorgegebenen Schnittiefe des Drehstahls 8 auch mehrfach wiederholt werden. Wenn eine mehrfache Bearbeitung für die Erzielbarkeit einer höheren Oberflächengüte vorgegeben wird, dann wird dabei eine aufeinanderfolgende Zustellung der Schnittiefe in mindestens einer der beiden Grenzstellungen des Drehstahls 8 vorgenommen, also bspw. in der Ausgangsstellung 8'. Auf diese Ausgangsstellung kann der Drehstahl zum Beginn der Bearbeitung dadurch eingestellt werden, daß an der angetriebenen Riemenscheibe des Riementriebes 23 ein Griffteil vorgesehen ist, damit bei ausgekuppeltem Servomotor der Werkzeughalter 14 unter Mitwirkung der Schneckenräder 20, 21 um die Drehachse 10 gedreht werden kann.

Die Zustellung der Schnittiefe des Drehstahls 8 kann bspw. mittels des Maschinenschlittens der Drehmaschine vorgenommen werden. Diese somit indirekte Zustellung kann dabei mit der Umsteuerung der Drehbewegung des Werkzeughalters 14 gekoppelt sein. Alternativ kann für den Drehstahl 8 eine eigene Befestigungseinrichtung an dem Werkzeughalter 14 vorgesehen sein, um so über eine Verstellung dieser Befestigungseinrichtung relativ zu dem Werkzeughalter die Schnittiefe des Drehstahls auch entsprechend direkt in Bezug auf die zu bearbeitende Fläche des Drehteils 1 einstellen zu können. Schließlich ist auch denkbar, daß über eine Lagerung des Werkzeughalters 14 mittels Exzenterscheiben an der Konsole 17 eine Abstandsveränderung zu der zweiten Drehachse 10 erhalten wird, wobei mit dieser Abstandsveränderung die Schnittiefe des Drehstahls 8 zusgestellt wird.

## Patentansprüche

1. Verfahren zur Herstellung einer im wesentlichen torusförmigen Fläche (7) an einem Drehteil (1) durch eine spanabhebende Bearbeitung, bei welchem das Drehteil (1) um eine erste Drehachse (3) gedreht und an seiner zu bearbeitenden Fläche (7) mit einem Drehstahl (8) in Berührung gehalten wird, der um eine rechtwinklig zu der ersten Drehachse (3) verlaufende zweite Drehachse (10) gedreht werden kann, die durch die vorbestimmte Mitte (4) der Kreisfläche (2) des Torus hindurchgeht, der während der Drehung des Drehteils (1) um die erste Drehachse (3) die zu bearbeitende Fläche (7) des Drehteils (1) ergibt.

2. Verfahren nach Anspruch 1, bei welchem die torusförmige Fläche (7) an dem Umfang eines Handrades für ein Klapplager verläuft und über etwa 270° des Umfangs der Kreisfläche (2) des Torus in Bezug auf deren vorbestimmte Mitte (4) reicht, wobei die Drehung des Drehstahls (8) um die zweite Drehachse (10) auf eine winkelmäßig entsprechend begrenzte Schwenkbewegung zwischen einer Ausgangs- und einer Endstellung relativ zu der zu bearbeitenden Fläche (7) des Drehteils (1) gesteuert wird.

3. Verfahren nach Anspruch 2, bei welchem die winkelmäßig begrenzte Schwenkbewegung des Drehstahls (8) in jeder der beiden Grenzstellungen umgesteuert wird, wobei in wenigstens einer der beiden Grenzstellungen eine progressive Zustellung der Schnittiefe des Drehstahls (8) vorgenommen wird.

4. Verfahren nach einem der Ansprüche 1 bis 3, bei welchem die Zustellung der Schnittiefe des Drehstahls (8) in Abhängigkeit von dem Vorschub geregelt wird, mit welchem der Drehstahl (8) um die zweite Drehachse (10) gedreht wird.

5. Verfahren nach einem der Ansprüche 1 bis 4, bei welchem die Drehung des Drehstahls (8) um die zweite Drehachse (10) motorisch angetrieben wird.

6. Verfahren nach einem der Ansprüche 1 bis 5, bei welchem die Drehung des Drehteils (1) um die erste Drehachse (3) auf einer Drehmaschine und die Drehung des Drehstahls (8) um die zweite Drehachse (10) unter Verwendung eines für eine Befestigung des Drehstahls vorgesehenen Werkzeughalters (14) durchgeführt wird, wobei die erste Drehachse (3) durch die waagrecht verlaufende Achse der Arbeitsspindel der Drehmaschine bestimmt ist, zu welcher die zweite Drehachse (10) des Werkzeughalters (14) vertikal ausgerichtet ist.

7. Vorrichtung zur Herstellung einer im wesentlichen torusförmigen Fläche (7) an einem Drehteil (1) durch eine spanabhebende Bearbeitung, bei welcher das Drehteil (1) durch die Arbeitsspindel einer Drehmaschine gedreht wird und an seiner zu bearbeitenden Fläche (7) mit einem Drehstahl (8) in Berührung gehalten wird, der an der Drehmaschine mittels eines Werkzeughalters (14) angeordnet ist, welcher um eine rechtwinklig zu der ersten Drehachse (3) verlaufende zweite Drehachse (10) gedreht werden kann, die durch die vorbestimmte Mitte (4) der Kreisfläche (2) des Torus hindurchgeht, der während der Drehung des Drehteils (1) mittels der Arbeitsspindel der Drehmaschine die zu bearbeitende Fläche (7) des Drehteils (1) ergibt.

8. Vorrichtung nach Anspruch 7, bei welcher der Werkzeughalter (14) über die zweite Drehachse (10) an einem Maschinenschlitten der Drehmaschine drehbar abgestützt ist.

9. Vorrichtung nach Anspruch 7 oder 8, bei welcher der Werkzeughalter (14) im wesentlichen U-förmig ausgebildet ist, wobei über die beiden Schenkel (15, 16) der U-Form die zweite Drehachse (10) an einer Konsole (17) drehbar abgestützt ist und der zwischen den beiden Schenkeln (15, 16) verlaufende Steg (13) der U-Form für die Anordnung des Drehstahls (8) vorgesehen ist.

10. Vorrichtung nach Anspruch 9, bei welcher der Drehstahl (8) durch eine für eine Zustellung der Schnittiefe des Drehstahls relativ zu dem Werkzeughalter (14) verstellbare Befestigungseinrichtung an dem Werkzeughalter gehalten wird.

11. Vorrichtung nach einem der Ansprüche 7 bis 10, bei welcher für den Werkzeughalter (14) ein motorischer Antrieb vorgesehen ist.

12. Vorrichtung nach Anspruch 11, bei welcher in den motorischen Antrieb des Werkzeughalters (14) eine Getriebeübersetzung (20, 21, 23) zwischengeschaltet ist.
